# EUROPEAN PATENT APPLICATION

(11) **EP 3 974 647 A1**
(43) Date of publication of application: **30.03.2022**
(21) Application number: 20198514.0
(22) Date of filing: 25.09.2020
(51) Int. Cl.: F03D 17/00

(54) **METHOD AND SYSTEM FOR VISUAL INSPECTION OF OFFSHORE WIND TURBINE GENERATORS**

(71) Applicant: Ventus Engineering GmbH, 1030 Wien (AT)
(72) Inventor: LÜBKER, Poul Anker Skaarup, 6340 Baar (CH); MINGALIEV, Shavkat, 1010 Wien (AT); GALETSAS, Chrysanthos, 1100 Wien (AT)
(74) Representative: Patrade A/S

(57) **Abstract**

Disclosed is a method of performing a visual inspection of an off-shore wind turbine (WTG) using a vessel with an adaptive platform. The adaptive platform may support a visual inspection system comprising a camera with a line of sight and a field of view. There is an act of operating the visual inspection system whilst being supported by the adaptive platform and with the line of sight towards a specific off-shore wind turbine with at least one fix-point on the offshore wind turbine generator (WTG). There is an act of adjusting the adaptive platform to maintain the line of sight towards the least one fixed-point on the offshore wind turbine generator. There is an act of capturing at least one image of the field of view in the line of sight using the visual inspection system. Also disclosed is an adaptive platform and a method of using the adaptive platform to enable unmanned aerial vehicle (UAV) visual inspection of offshore wind turbines.

## Description

### BACKGROUND OF THE INVENTION

### Field of the Invention

The present invention relates to a method and system of visual inspection of an off-shore wind turbine generator.

### Description of Prior Art

Inspection of wind turbine generators is important to improve performance and minimize operational and maintenance costs. Inspection of static, i.e. at stand-still, as well as dynamic, i.e. operating, wind turbines is the scope of this disclosure.

Improvements in availability of types of inspections as well as accuracy are needed. Furthermore, ease of use and reliability including consistency is also to be improved.

In particular inspection of offshore wind turbines is important and has proven very difficult.

At least there is a long felt need to provide reliable inspection method and systems capable of inspecting offshore wind turbines.

### SUMMARY OF THE INVENTION

### Description

An objective is achieved by a method of visually inspecting an offshore wind turbine generator (WTG) and parts thereof during operation. The method comprises acts as will be disclosed in the following.

In an aspect, there is a method of performing a visual inspection of an off-shore wind turbine (WTG) using a vessel with an adaptive platform. The adaptive platform may support a visual inspection system comprising a camera with a line of sight and a field of view. The method may comprise acts of as follows.

There is an act of operating the visual inspection system whilst being supported by the adaptive platform and with the line of sight towards a specific off-shore wind turbine with at least one fix-point on the offshore wind turbine generator (WTG).

The fix-point may be an actual visual point or a characteristic feature such as an edge or tip of a structure e.g. the hub or an edge of the nacelle. The fix-point may be a direction towards the wind turbine generator. As such the fix-point may be a set of coordinates or a directional vector obtained or defined at a certain point in time.

There is an act of adjusting the adaptive platform to maintain the line of sight towards the least one fixed-point on the offshore wind turbine generator.

There is an act of capturing at least one image of the field of view in the line of sight using the visual inspection system.

There is an act of inspecting structural aspects of the wind turbine generator (WTG) by comparing the at least one other captured image with the at least one reference image.

The acts of capturing and inspecting will be outlined in the following:
Applying the above enables to sufficiently compensate for the boat or vessel movements and consequently, camera movements, and thus, the measurements i.e. image capturing results will be as desired.

In brief, the following levels of stabilization may be applied.

At image acquisition or capturing level, the boat or vessel is anchored or positioned at a position relative to the inspection object such as an offshore wind turbine. The vessel used for performing e.g. offshore dynamic blade pitch measurements, i.e. of a rotating blade on an offshore wind turbine, has means to retain the desired position and direction during image acquisition.

The adaptive platform may involve use of a camera gyro stabilization mount, where stabilization of the camera can be set up in all three rotations roll, pitch, and yaw.

Minor translations may be compensated to a certain extent.

Such camera gyro mount stabilization may be configured to provide additional stabilization of the complete camera setup with the gyro stabilization mount, in all three translations or directions being surge, sway and heave.

Attention should be on stabilization of heave translation.

Additional boat or vessel stabilization may be provided in at least one rotation and/or translation. Attention should be on stabilization of roll.

The camera with a lens is configured to following the vessel movements and can be rotated in all three orientations i.e. yaw, pitch and roll during image acquisition or capturing.

In an aspect, the act of adjusting is performed by a first adaptive platform supported by a second adaptive platform, wherein the first adaptive platform is stabilizing the camera and the second adaptive platform is stabilizing the first adaptive platform.

The first adaptive platform may support and stabilize the camera with the lens following the vessel movements and can be rotated in all three orientations i.e. yaw, pitch, and roll, during image acquisition or capturing.

The second adaptive platform may support and stabilize the first adaptive platform i.e. the camera with gyro mount overall structure following vessel movements and can be moved in all three directions i.e. surge, heave and sway during image acquisition or capturing.

This second adaptive platform may be used for alternative purposes as will be described later.

These movements, depending on their significance, could be compensated during image capturing and/or during image analysis. A deciding factor for the need of a camera stabilization of translations during the image capturing, may be whether or not the wind turbine rotor and the desired regions of interest (ROIs) are moving out of the field of view of the camera perspective.

If the above mentioned ROIs are not visible during image acquisition due to the significant camera translations, an additional stabilization platform can compensate for these translations. Such additional stabilization platforms can be added to the gyro stabilization mount as outlined.

Post-processing of the captured images including sorting, translations and analysis may also be applied to such images to further improve image analysis and visual inspection.

In brief, there may be acts of adjusting that comprise one or more acts of stabilizing the adaptive platform, e.g. the first adaptive platform, in at least one of roll, pitch and yaw orientations.

Hence the adaptive platform is stabilized as a function of deviations from level.

The act of adjusting may comprise one or more acts of translocating the second adaptive platform in at least one of surge, sway and heave.

Furthermore, there may be an act of positioning the vessel in a suitable position related to a feature of the offshore wind turbine e.g. the rotor plane of the off-shore wind turbine (WTG) and retaining the vessel in that position.

In an aspect, the act of operating comprises one or more acts of stabilizing the vessel. The vessel may be stabilized in both low and high water depths. The vessels may use a Global Positioning System (GPS) for anchoring and for retaining the same position and a Dynamic Positioning System (DPS) for active stabilization in certain boat translations (sway, surge) and rotations (yaw).

Such system may be available in the vessel used. In low water depths, a traditional anchoring may also be an option.

In an aspect, acts are performed by using a small offshore vessel in the class of a crew transfer vessel (CTV).

Such small offshore vessels are by nature more flexible to operate than larger inspection vessels and cheaper. However, such smaller vessels are prone to waves of the sea and more unstable. There has been a long felt need to be able to use such vessels for inspection - possibly at the same time as or in conjunction with transferring crew to e.g. offshore wind farms. However, the dynamics have been too great making inspection impossible. The presented acts and equipment has enabled use of such small off-shore vessels including so-called crew transfer vessels.

As such the above allows capturing of images that can be inspected. In particular images relating to dynamic aspects of an offshore wind turbine can be captured. As an example pitch angle measurements of a rotating offshore wind turbine.

### Sorting ROI

The method in particular relates to offshore wind turbine generators in operation, i.e. while the rotor is rotating. This is referred to as dynamic inspection. The method may also be applied to wind turbines during stand still. This is referred to as static inspection.

There is an act of pointing the camera of the visual inspection system with a field of view about a line of sight in a plane of the rotor blade of the wind turbine generator (WTG) as outlined at sea. Thus, the blade axis will be aligned with the line of sight at some point during turning off the rotor during operation of the wind turbine generator.

There may be a fix-point or an object of the wind turbine that is static or can serve as a guide. The line of sight is directed towards the fix-point and the area of interest of the inspection is at least for some time or periodically within the field of view.

The visual inspection system may be mounted on a vessel using suitable means to fix and adjust the line of sight.

The adjustable platform may have a frame and connection means to connect to the vessel. Suction cups may be used.

There is an act of capturing multiple images of the field of view using the visual inspection system. The capturing is performed whilst operating the adjustment platform as outlined.

The capturing of images of the field of view may be of multiple images with at least part of the rotor blade in the image. The positioning or pointing may be adjusted in order to capture suitable images.

There is an act of selecting at least one reference image amongst the captured images. The act of selecting may also be from reference images made available from other wind turbine generators, from a design or from a historic library of images, say from completion of assembly, from a previous inspection or calibration of the wind turbine generator.

Selecting may be of one or more images and thus, disregarding others. The selection may be by processing images, classifying images or filtering images as will be disclosed. Selecting may also be by an operator of the system via an interface.

There is an act of comparing the at least one other captured image with the at least one reference image. The act of comparing will be disclosed, but generally a comparison between one or more reference images and at least one captured image is performed. The comparison may be based on identifying features such as edges, intensities, colours, markers, or the like.

There is an act of inspecting aspects, or structural aspects, of the offshore wind turbine generator (WTG) as a function of the result of the act of comparing.

Thus, inspection may be with respect to certain quantities such as structural quantities of the wind turbine generator. Those may be blade pitch angle, the angle the blade is mounted with on the hub, blade bending, blade twisting, blade profile, misalignments, e.g. shifts, or general surface properties including damages, dents, and alike.

This allows for systematic collection of images, organisation of images and processing of images to perform improved inspection of wind turbine generator parts including blades and differences of blades.

Hence, the visual inspection allows the capture of optimised or maximum energy from the wind and to minimize loads on the wind turbine rotor and on other main components in wind turbines and in consequence hereof extends or reaches the maximum life time of the wind turbine generator. The visual inspection enables the rotor to be adjusted or balanced.

Inspection may be more accurate and faster than manually capturing images and analysing the images and extracting information about the wind turbine generator.

In an aspect, the act of capturing is performed after an act of triggering.

The act of triggering may be according to a trigger which setting is performed using a graphical user interface (GUI) configured to present at least one captured image and with at least one means for an operator to adjust a parameter.

The parameter may be a feature of the image. It may be a pixel value, a location of an edge or alike. In an aspect, an operator may have defined a region of interest (ROI) or a point of interest (POI).

The act of capturing may be performed after an act of triggering according to a trigger that is initiated as a function of the region of interest (ROI) of an offshore wind turbine generator (WTG).

Triggering may be auto-triggering, where an algorithm of the camera or additional external equipment connected to the camera provides a trigger when the brightness conditions on the specified ROI change. A computer may be controlling the camera.

Therefore, when the blade tip is passing through the ROI, the brightness conditions change and a trigger is initiated.

Triggering may be software triggering or semi-automated. This may be a triggering option where a mean value of the brightness in the ROI is calculated. When the blade is passing through the ROI, there is a peak indicating the change of this mean brightness value. When this signal is captured, the camera is triggered (see example).

The advantage of this software triggering option is that an operator can check/change this signal and, by using various options, try to capture it in the most efficient way.

A further advantage of using the outlined trigger is that wind turbine generators operate with variable or semi-variable speed continuously adjusting to the wind condition like gusts etc., and therefore, a trigger as known hereto is very difficult / if not impossible to calculate based on historical data collected from the rotor operation.

Triggering may be manual triggering which option is used in a situation where the other two options are not working optimally. For example, changes in brightness conditions, high wind speed with bending variations, shiny blade surface, etc. may require manual triggering.

Triggering may be conditional to conditions of the adjusting platform or signals generated by the adjusting platform. Triggering may happen when deviations from e.g. level are within a certain range or when translocations are within a certain range. Triggering may also be so that the number of images to be captured is a function of how stable the camera is held.

In an aspect, there is an act of sorting the captured images. The act of sorting may be performed by image processing. Sorting or filtering may involve choosing captured images and disregarding other images. Sorted images may arrange images in a specific order or generate a set of sorted images (or elected) images. Arranged images may be divided by a threshold or any other criteria.

Sorting images may be automated, semi-automated (requiring operator input) or manual.

Sorting may be during a dynamic measurement where several pictures are captured or taken for every blade whenever the blade is passing through the selected region of interest.

Out of these images, one is selected as a reference in order to match the other two blades in terms of inspection, such as horizontal alignment. This procedure defines the sorting step of the post-process analysis, completed prior to an inspection. This procedure is performed manually and/or automatically with the use of software.

The advantage of this sorting procedure is that, regardless of any change in the rotational speed of the wind turbine, even within one rotation which will inevitably affect the triggering of the camera, one can efficiently select one image per blade that matches perfectly with the other two blades in terms of inspection requirements, including those of horizontal alignment.

An advantage of the automation of this procedure is time efficiency demands for operating on site directly after inspection. A manual sorting would require a couple of hours while the automated sorting can provide the same results in a couple of minutes. Furthermore, the sorting allows the collection of appropriate images that will also increase accuracy and expand the number of inspections possible.

In an aspect, the act of sorting is performed by an input from an operator and involves an act of defining a region of interest (ROI) in a reference image and selecting captured images, based on the region of interest (ROI).

In an aspect, sorting is performed based on how stable the camera was held e.g. based on signals used to adjust or stabilise the camera during operation.

There may be an act of sorting (400) the captured images (22), where the sorting (400) is performed on the basis of an input from an operator and involves an act of defining (410) a region of interest (ROI) in a reference image (20) and selecting captured images (22) based on the region of interest (ROI).

In an aspect, the act of sorting (400) involves an act of defining one or more regions of interest (ROI) of the off-shore wind turbine generator (WTG) on the reference image (20) and the at least one other captured image (22). At least one region of interest (ROI) is a reference region of interest (RROI). There is an act of transforming (900) at least one other captured image (22), the act being performed according to the reference region of interest (RROI) of the reference image (20).

By way of example, images may be captured by a high-speed camera, which at present has a maximum frame rate of 543 frames per second (fps). With that frame rate, a total number of 5900 images can be recorded. Therefore, with 100 images/trigger (default value), a total amount of 59 blade passings, or 19 full rotor rotations, can be recorded. A person skilled in the art will find it natural to apply the available cameras and their ever increasing capacity and ever decreasing price to balance the needs of an inspection.

This exemplary number of recorded rotations is targeted in order to assure that there will be enough data for the accurate calculation of, in this case, an inspection of a relative blade pitch misalignment between the wind turbine blades of the offshore wind turbine generator.

In example, what influence the accuracy of an inspection such as a relative blade pitch misalignment has is that appropriate triggering and/or sorting results in improved or new inspections. In example, it may be possible to inspect WTG blade pitch change during the measurement. With a high number of recorded rotations, better or more measures of pitch angle change can be detected by comparing the results of each rotation with the consecutive ones and filtering out rotations where the overall pitch angle is different.

In example, this filtering out rotations, where the relative blade pitch angles differ to the other rotations, which, in example could be due to the fact that the wind turbine generator blade pitch system has been activated during this specific rotation.

Capturing or acquisition may be computer implemented, as software is used for both the static and dynamic measurements. The difference between the two measurements is that the static measurement does not need any actual triggering of the camera, since the wind turbine rotor is not rotating during the inspection, where each blade is locked at the exact same position during inspection. To hereto address unforeseen triggering issues for dynamic inspection, the following aspect has been found to provide a reliable set of images for selecting and sorting.

In an aspect, the act of capturing relevant images is performed after the act of triggering according to a trigger that is initiated as a function of the region of interest (ROI).

This is a triggering option where the mean value of the brightness in the ROI is calculated. When the blade is passing through the ROI, there is a peak indicating the change of this mean brightness value. When this signal is captured, the camera is triggered (See example).

The advantage of this triggering option is that one can check/change this signal and, by using various options, try to capture it in the most efficient way.

In an aspect, the act of triggering is initiated as a function of the region of interest (ROI) as when a brightness value of the region of interest (ROI).

This is a triggering option where the mean value of the brightness in the ROI is calculated. When the blade is passing through the ROI, there is a peak indicating the change of this mean brightness value. When this signal is captured, the camera is triggered. A person skilled in the art will appreciate variation of such methods, including tuning, or adjusting, of parameters as will be exemplified.

In an aspect, the act of inspecting comprises an act of determining a deviation amongst blades, wherein the act of inspecting involves applying a set of blade metrics to the reference image, and wherein the act of comparing is performed by blade metrics applied to the reference image compared to the blade metrics of at least one captured image.

Having a reference image and one or more captured images, optionally images provided by sorting, allows for introducing new measures of inspections or increasing accuracy of inspections.

In example, blade pitch requires one metric to determine basically an angle. Blade bending requires a different metric. Other structural changes e.g. twisting and/or shifts may require yet another metric.

In example of analysis of the dynamic inspection of say, relative blade pitch misalignment, it should be noted that the relative blade pitch misalignment is calculated at the same rotation for several consecutive rotations. Then the results of each rotation are compared to the other consecutive rotations. The ones where the pitch angle is different, or significantly different, are filtered out. This is achieved by sorting. The final results are based on the ones that have been calculated repeatedly on a number of consecutive rotations. This filtering or sorting is done in order to avoid miscalculation of the relative blade pitch misalignment from a possible blade pitch change, e.g. from a possible blade pitch change due to the blade pitch system actually changing the pitching of the blades. Using this filtering or sorting also means that pitching information from the WTG is not needed during the inspection.

In example, and as will be detailed later, the method imposes a metric based on the nacelle edges and, therefore, a nacelle line may be defined for every blade. Thus, the recording and following of the nacelle movement in each picture, allows assuring that the relative blade pitch misalignment calculation is not influenced by tower movement or nacelle line angle changes. The inspection is thus calibrated to fixed points or reference points of the wind turbine generator.

Both the static and dynamic measurement analyses the max chord area. Alternative analyses could be performed using other chord areas along the blade, i.e. using other metrics or refined metrics.

Thus, in an act of inspecting, there may be an act of determining relative pitch misalignment between at least two blades wherein the act of inspecting involves applying a set of pitch angle metrics to the reference image and the at least one other captured image. There may be an act of comparing that is performed on the pitch angle metrics of the reference image and those of the at least one other captured image.

As will be exemplified, such acts have the advantage that the calculation of relative blade pitch misalignment between the wind turbine blades improves in accuracy and in time efficiency to a degree or order that allows for the inspection and determination of the relative blade pitch misalignment result to be performed on site, and any blade pitch correction needed can be done immediately after as part of the inspection process.

In an aspect, the act of sorting may involve an act of defining one or more regions of interest (ROI) of the wind turbine generator (WTG) on the reference image and the at least one other captured image, wherein at least one region of interest (ROI) is a reference region of interest (RROI), and wherein there is an act of transforming at least one other captured image, the act being performed according to the reference region of interest (RROI) of the reference image.

Applying regions of interest as outlined improves the data processing.

In example of an inspection of the relative blade pitch misalignment between the wind turbine blades, a variety of image processing methods are used. These include pattern and feature recognition, pixel coordinate detection, pixel-by-pixel difference, brightness management, angle calculations, and slope and proportion evaluations.

The operator selects or defines one or multiple regions of interest (ROI) - as will be exemplified by rectangles later - following the principles mentioned above.

Some ROIs, reference regions of interest (RROI), are defined on fixed or stationary features, e.g. on the nacelle, some ROIs on moving features, e.g. a blade.

The acts that might be implemented on a computer detect the defined edges of the first image in all the other sorted blade images, and calculate the angle difference between the two lines (nacelle line and blade line) for each of them.

After the calculation of the reference angles for each blade, the reference angle result for each blade is subtracted from the corresponding result of the previous blade, e.g. Blade A - Blade B, and the relative blade pitch misalignment between the three blades may automatically be calculated.

Thus, in an aspect, at least two reference regions of interest (RROI) and a set of wind turbine metrics are defined by at least one relative region of interest (ROI) and wherein there is an act of transforming the least one relative region of interest (ROI) before comparing the transformed wind turbine metrics.

In an aspect, at least two reference regions of interest (RROI) and a set of wind turbine metrics defined by at least one relative region of interest (ROI) is used and followed by an act of transforming the least one relative region of interest (ROI) before comparing the transformed wind turbine metrics.

Thus, one or more images may be calibrated or aligned according to reference, anchoring, or fixed structural points. The transformation may be a shift, a rotation, scaling of an image, or similar operations on an image to align reference regions of interests, edges, structural features etc. within a region of interest of images.

An objective is achieved by a visual inspection system comprising means for performing the act as disclosed.

A person skilled in the art will be able to select appropriate image capturing devices and computers including portable computers that can be used on site.

In an aspect, the visual inspection system may include an image capturing device configured with a field of view about a line of sight, and a computational unit configured with an interface means configured to define at least one region of interest (ROI) on a captured image and for selecting at least one reference image.

The image capturing device may be a high speed type of camera, a line scan camera or any other suitable camera including e.g. a scanning LiDAR. The image capturing device may be a high speed type of camera, a line scan camera or any other suitable camera or LiDAR technology.

The acts may be programmed in a computer program product comprising instructions to cause the visual inspection system to perform the acts as disclosed. The instructions may be on a computer-readable medium having stored thereon the computer program.

The above disclosed actions are exemplified in view of blade pitch misalignments as will be exemplified in the description of the drawings. However, a person skilled in the art may apply the methods and acts to other types of inspections, including bending of blades, twisting of blades, profiles of blades, structural changes, damages, and refined inspections with more details or accuracy.

The outlined visual inspection methods and systems may also be applied across a wind turbine generator fleet, where comparisons may be performed.

In an aspect, the act of selecting at least one reference image is performed by selecting an image from another wind turbine generator or a design manual. Thus, the reference image may be from the design or from a wind turbine generator of a similar type and possibly selected due to a reference performance.

This disclosure has exemplified the visual inspection based on the individual misalignment in between the blades on a specific WTG, but the disclosed visual inspection may also be applied to compare/relate, say the pitch angles on the actual inspected WTG, with other relevant reference pitch angles.

In example, the most efficient pitch angle in operation is defined/identified from inspections and investigations done on other wind turbine generators by the owner, by an OEM or otherwise defined/identified.

As such, pitch angle misalignment in such a case could therefore be defined both in between the X blades on the WTG inspected - and also related to an ideal pitch angle defined from other inspections by the owner, by the OEM, or otherwise.

An offshore wind turbine generator visual inspection system may be configured with means to perform the acts disclosed.

An offshore wind turbine generator inspection system may comprise an adaptive platform supporting a visual inspection system comprising a camera with a line of sight and a field of view.

The adaptive platform is configured to maintain the line of sight towards the at least one fix-point of an off shore wind turbine generator.

There may be a first adaptive platform configured to stabilize the camera. There may be a second adaptive platform configured to stabilize the first adaptive platform.

The visual inspection system is further configured to capturing at least one image of the field of view of the line of sight.

The visual inspection system may be configured with a trigger configured to trigger an act of capturing that is initiated as a function of the region of interest (ROI) of an off shore wind turbine being present in the field of view along the line of sight.

The inspection system may further comprise a computational unit configured with an interface means configured to define at least one region of interest (ROI) on a captured image and for selecting at least one reference image.

In an aspect, there is a method of performing an unmanned aerial vehicle (UAE) visual inspection of an off-shore wind turbine. A visual inspection system and a vessel with an adaptive platform are used. The adaptive platform has a helipad configured to support an unmanned aerial vehicle (UAV). The support may be of landing, lifting, i.e. liftoff, and holding the UAV. The UAV may comprise a camera with a line of sight and a field of view. The camera may be configured as outlined previously.

The offshore wind turbine inspection may comprise an act of positioning the unmanned aerial vehicle (UAV) relative to the offshore wind turbine. The line of sight may be towards the wind turbine.

There is an act of capturing at least one image of the field of view in the line of sight using the camera. The capturing may be performed from different positions in relation to the offshore wind turbine generator. Greater flexibility and faster inspections of offshore wind turbines can be performed even during circumstances otherwise impossible.

There is an act of landing the unmanned aerial vehicle (UAV) on the helipad whilst adjusting the helipad of the adaptive platform. The helipad may be adjusted as previously outlined.

And as also described, inspecting structural aspects of the wind turbine generator by comparing the at least one other captured image with the at least one reference image can be performed.

There may be an act of lifting, i.e. performing a lift-off, of the unmanned aerial vehicle (UAV) from the helipad whilst adjusting the adaptive platform.

As outlined, acts of adjusting may be performed by a first adaptive platform supported by a second adaptive platform, wherein the first adaptive platform is stabilizing the helipad and the second adaptive platform is stabilizing the first adaptive platform.

The adaptive platform may be as described previously.

The first and/or second adaptive platform may also be used in other applications than the drone landing.

The adaptive platform or gyro platform keeps the helipad for a drone in totally horizontal position whilst at the same time compensating for the vessels up and down movements.

The act of adjusting may comprise one or more acts of stabilizing the first adaptive platform in at least one of roll, pitch and yaw orientations during landing or lifting of the UAV.

There may be a further act of positioning the vessel with the UAV in a suitable position related to the rotor plane of the offshore wind turbine and retaining the vessel in that position.

The act of adjusting comprises one or more acts of translocating the second adaptive platform in at least one of surge, sway and heave directions during landing or lifting of the UAV.

The act of landing or lifting comprises one or more acts of stabilizing the vessel. The acts are performed by using a small offshore vessel in the class of a crew transfer vessel (CTV).

The adjustable platform may have an interface for connecting and supporting the helipad. In an aspect, the helipad and the camera can be mounted to the adaptive platform e.g. on the clamp and interchanged.

As such the visual inspection system for offshore wind turbines may comprise a camera fixed to the adaptive platform as outlined and inspection of an offshore wind turbine generator may be performed as outlined. The camera may be replaced by the helipad. An unmanned aerial vehicle with a separate camera or the camera previously mounted on the adaptive platform may be installed on the unmanned aerial vehicle, and inspection of an offshore wind turbine may be performed as outlined.

The UAV and the adaptive platform may be configured to exchange data or information. In an aspect, the adaptive platform may send a signal about the stability of the helipad for the UAV to perform the actual landing or lifting.

In connection with the helipad, i.e. landing platform, or adaptive platform there may be installed one or more, e.g. two, signal transmitters on the landing platform. Hence, with or without gyro, providing landing or lifting guidance directly to the drone flight controller so that the drone flight controller can override a normal, e.g. on-shore, landing mode and get into an off-shore landing mode where the drone will be guided by the signal, such as a position signal from the signal transmitters so that the drone simultaneously and instantly will follow the movement of a landing platform and therefore improve or enable safe landing.

### BRIEF DESCRIPTION OF DRAWINGS

Embodiments of the invention will be described in the figures, whereon:
- Fig. 1: illustrates a wind turbine generator;
- Fig. 2: illustrates a vessel with a visual inspection system in relation to an offshore wind turbine generator;
- Fig. 3: illustrates orientations and definitions of dynamics of a vessel;
- Fig. 4: illustrates a camera supported by an adaptive platform;
- Fig. 5: illustrates views of the adaptive platform;
- Fig. 6: illustrates views of the adaptive platform;
- Fig. 7: illustrates a field of view of an offshore wind turbine;
- Fig. 8: illustrates visual inspection system and a wind turbine generator in two different planes;
- Fig. 9: illustrates a single captured image of a field of view and a representation of a series of captured image;
- Fig. 10: illustrates a graphical user interface according to the invention;
- Fig. 11: illustrates a graph showing three different cases each giving different results;
- Fig. 12: illustrates computer implemented sorting of captured images;
- Fig. 13: illustrates an act of inspecting involving applying a set of blade metrics and an inspection of relative blade pitch misalignment;
- Fig. 14: illustrates acts of sorting and acts of comparing using an applied metric;
- Fig. 15: illustrates further improvement in accuracy of measures from images by applying a transformation; and
- Fig. 16: illustrates a method of visually inspecting a wind turbine generator;
- Fig. 17: illustrates a method of visually inspecting an offshore wind turbine generator; and
- Fig. 18: illustrates a method of an unmanned aerial vehicle visual inspection of an offshore wind turbine generator.

| | |
|---|---|
| Vessel | 1 |
| Sea | 5 |
| Visual inspection system | 10 |
| Image capturing device/camera | 11 |
| Field of view | 12 |
| Line of sight | 14 |
| Computational unit | 16 |
| Reference image | 20 |
| Reference point | 21 |
| Captured images | 22 |
| View of interest | 23 |
| Region of interest | ROI |
| Reference region of interest | RROI |
| Wind turbine generator | WTG, 30 |
| Fix-point | 32 |
| Wind turbine metrics | 40 |
| Wind turbine tower | 46 |
| Nacelle | 48 |
| Rotor blade | 50 |
| Rotor | 51 |
| Blade metrics | 52 |
| Rotor plane | 53 |
| Pitch angle metrics | 54 |
| Rotor plane | 55 |
| Relative pitch misalignment | 58 |
| | |
| Trigger | 60 |
| Parameter | 62 |
| | |
| | |
| First adaptive platform | 70 |
| Gyroscope | 72 |
| Arm | 74 |
| Support deck | 75 |
| Clamp | 76 |
| Gimbal arrangement | 77 |
| Tilt adjustment means | 79 |
| | |
| | |
| Second adaptive platform | 80 |
| Suspenders/suspension system | 82 |
| Isolation deck | 85 |
| | |
| | |
| Offshore wind turbine generator visual inspection system | 90 |
| | |
| Adaptive platform | 91 |
| Frame | 92 |
| Suction cups | 94 |
| Vibration mounts | 95 |
| Camera support | 96 |
| Helipad | 98 |
| Graphical user interface | GUI |
| | |
| | |
| Method of visually inspecting | 1000 |
| Pointing | 100 |
| Capturing | 200 |
| Triggering | 210 |
| Selecting | 300 |
| Adjusting | 310 |
| Sorting | 400 |
| Defining | 410 |
| Comparing | 500 |
| Inspecting | 600 |
| Determining | 610 |
| Transforming | 900 |
| | |
| Performing visual inspection of an off-shore wind turbine | 2000 |
| Operating | 2100 |
| Adjusting | 2200 |
| Stabilising | 2220 |
| Positioning | 2300 |
| Retaining | 2330 |
| | |
| A method of performing an unmanned aerial vehicle (UAE) visual inspection of an off-shore wind turbine | 3000 |
| Positioning () the unmanned aerial vehicle (UAV) | 3100 |
| Landing | 3200 |
| Lifting | 3300 |

### DETAILED DESCRIPTION OF THE INVENTION

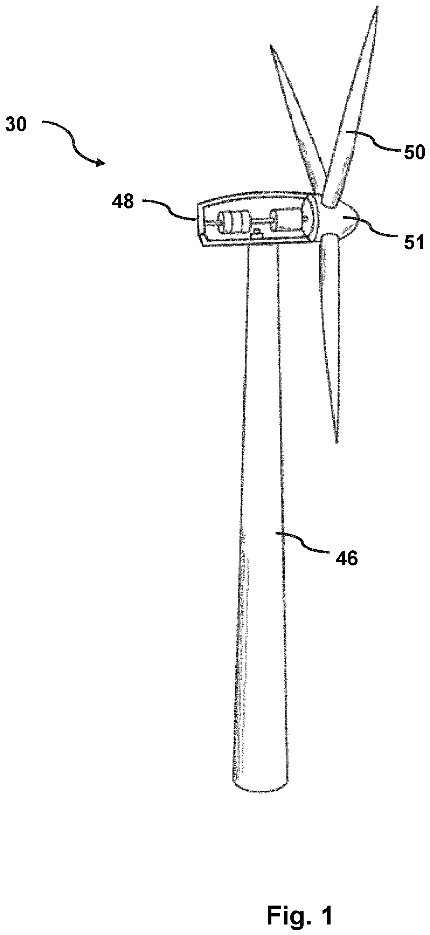

Figure 1 illustrates a wind turbine generator (WTG) 30 comprising a tower 46 supporting a nacelle 48 with blades 50 rotatably connected and forming a rotor 51. The wind turbine generator 30 is configured to be operated offshore.

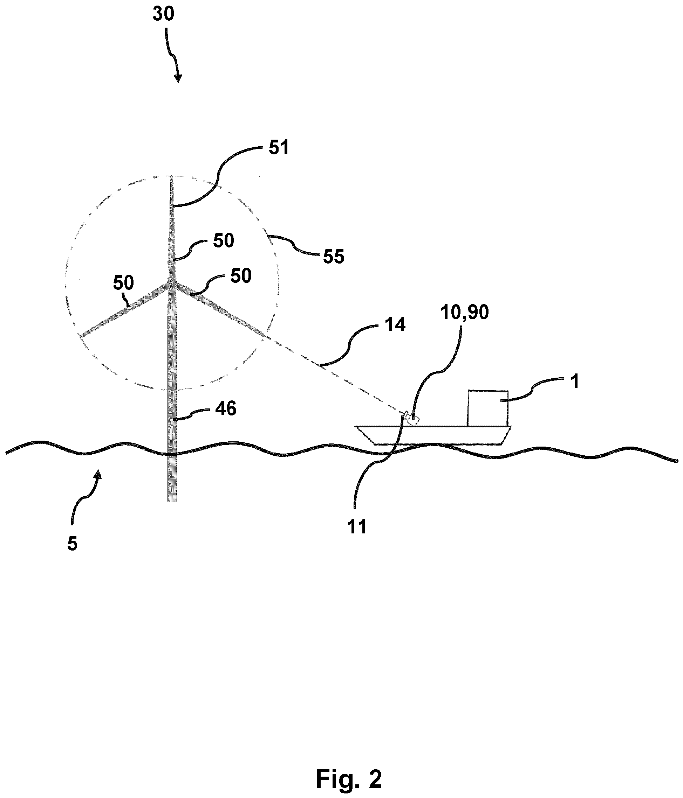

Figure 2 illustrates a vessel 1 with a visual inspection system 10 and/or an offshore wind turbine generator visual inspection system 90 in relation to an offshore wind turbine generator 30. The wind turbine generator has set of rotor blades 50 arranged in a rotor 51 and rotating in a rotor plane 55.

As an example, the vessel 1 and operation of the visual inspection system 10 is to obtain an inspection offshore dynamic, i.e. whilst operating blade 50 pitch measurement.

The wind turbine 30 is in operation and the camera 11 set-up is positioned on the vessel 1.

The camera 11 setup is placed at "4 o' clock" rotor 51 position, in order to avoid the tower 46 influence while the blade 50 is passing. The camera 11 setup is targeted on the wind turbine 30 blades 50, at a position that will allow it to align the field of view 14 with the length axis of the blade 50 as illustrated.

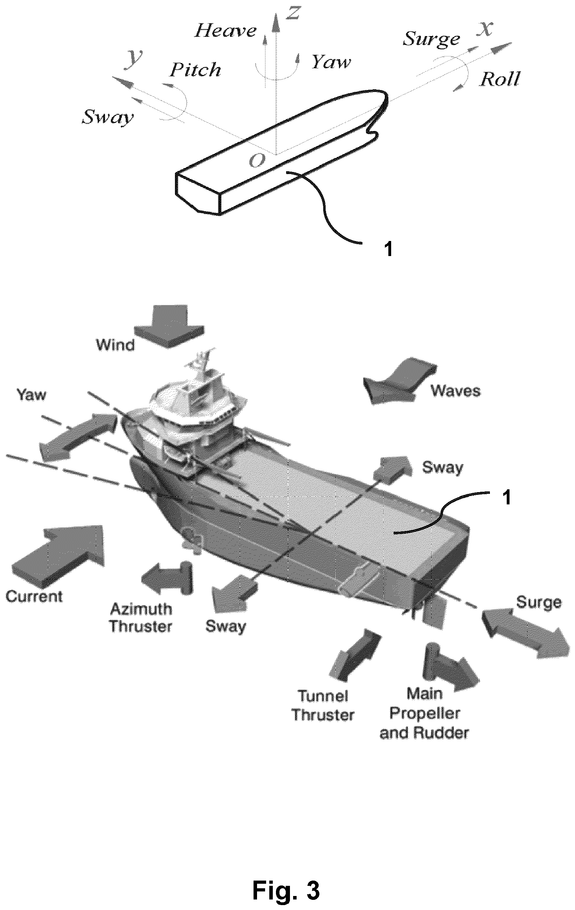

Figure 3 illustrates orientations and translations of a vessel 1. It is understood that the method and system are to be operated in view of the challenges of movements of an offshore vessel 1. In example, when inspection is of offshore dynamic blade pitch measurement.

The movement of the vessel and thus of the camera setup is positioned on. The main three factors causing vessel and thus camera movements are the waves, the wind and sea currents.

As a result of the interaction with the above, the vessel 1 and the camera that is located on it, perform the following movements. There may be rotations of roll (x axis), pitch (y axis), and yaw (z axis). There may be translations of surge (x axis), sway (y axis), and heave (z axis).

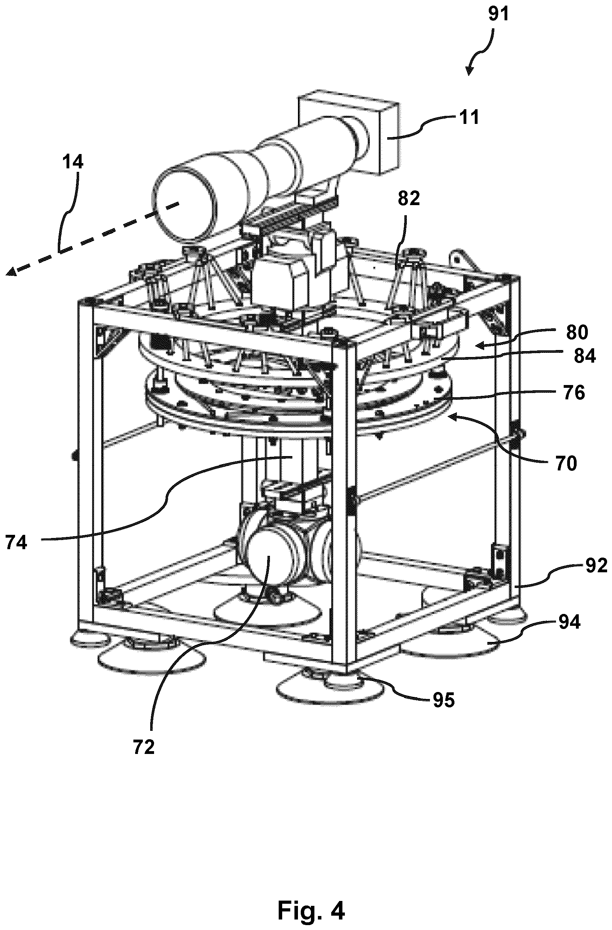

Figure 4 illustrates a camera 11 with a line of sight 14 supported by an adaptive platform 91. The adaptive platform 91 comprises a frame 92 and means in the form of suction cups 94 for the adaptive platform 91 to be fixed to a vessel.

The shown adaptive platform 91 has two adaptive platforms arranged in principle as follows.

There is a first adaptive platform 70 configured to support and stabilize the camera 11. The first adaptive platform 70 comprises a gyroscope 72 connected to the camera 11 via an arm 74.

There is a second adaptive platform 80 configured to support and stabilize the first adaptive platform 70. The second adaptive platform 80 has an isolation deck 85 that is suspended in the frame 92 by suspenders 82 or a suspension system. The isolation deck 85 is connected to a support deck 75 supporting the first adaptive platform 70.

The adaptive platform 91 is capable of a +/- 25 degrees pitch compensation, a +/- 25 degrees roll compensation, a +/- 10 degrees yaw compensation. Furthermore, there is a +/- 40 degrees tilt adjustment.

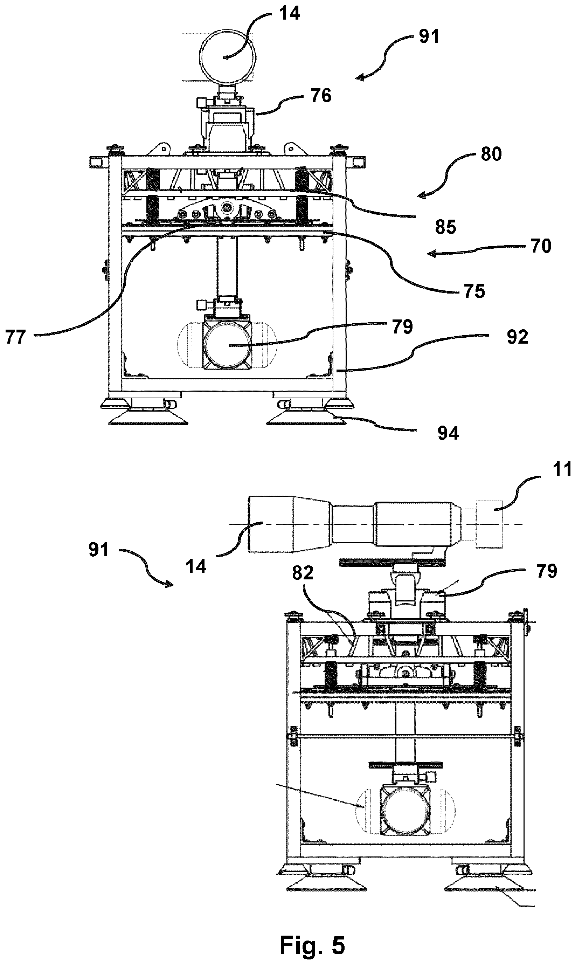

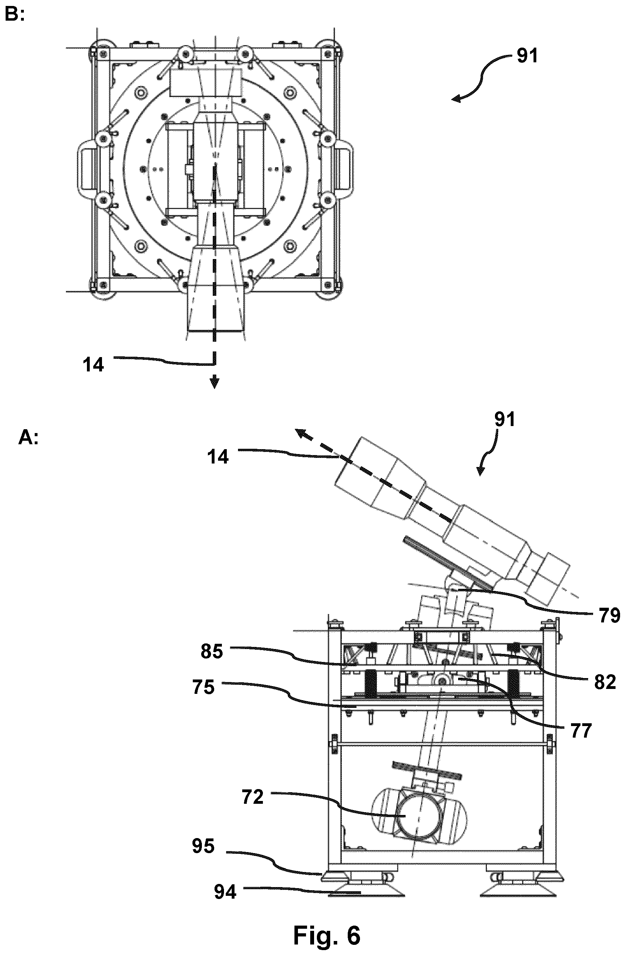

Figures 5 and 6 illustrate views of the adaptive platform 91 of figure 4. The frame 92 has suction cups 94 and further vibration mounts 95.

The camera 11 with the line of sight 14 is via a clamp 76 mounted to a gimbal arrangement 77, here a 3-axis gimbal mount connected to the support deck 75. The gimbal arrangement 77 is connected via a clamp 76 to the gyroscope 72. The camera 11 is mounted with a tilt adjustment means 79, which here is a motorized tilt-pan unit.

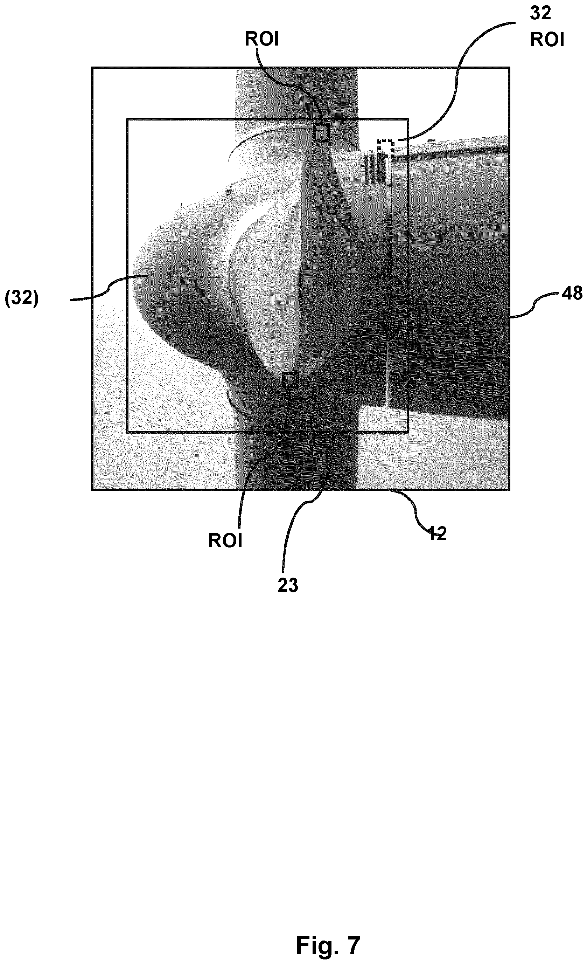

Figure 7 illustrates a field of view 12 showing of part of an offshore wind turbine 30.

The field of view 12 is obtained by directing the camera 11 (not shown) towards the wind turbine 30. In this case there is a fix-point 32 being the nacelle edge as an example. The field of view 12 captures more of the actually required images with the regions of interest (ROI), here being the edges of the respective tailing and leading edges of the blade 50. It is understood that the adaptive platform 91 (not shown) adjusts the camera 11 (not shown) to capture images where the adjustment may not give the same field of view 12 but the view of interest 23 may be covered.

The nacelle edge may also be a region of interest (ROI).

The movements of the camera 11 (not shown), depending on their significance, could be compensated during image acquisition and/or during image analysis. The deciding factor for the need of a camera setup translations stabilization during the image acquisition, is whether or not the wind turbine rotor view of interest 23 with the desired regions of interest (ROIs) are moving out of the field of view 12 of the camera perspective. The adaptive platform 91 (not shown) and the method ensure that images with the view of interest 23 are captured from a vessel 1 (not shown) and of an off-shore wind turbine generator 30.

If the above mentioned ROIs are not visible during image acquisition, due to the significant camera translations, an additional stabilization platform as disclosed can be provided to compensate for these translations.

In the following figures, aspects of post-processing field of view 12 images with at least one region of interest (ROI) are described.

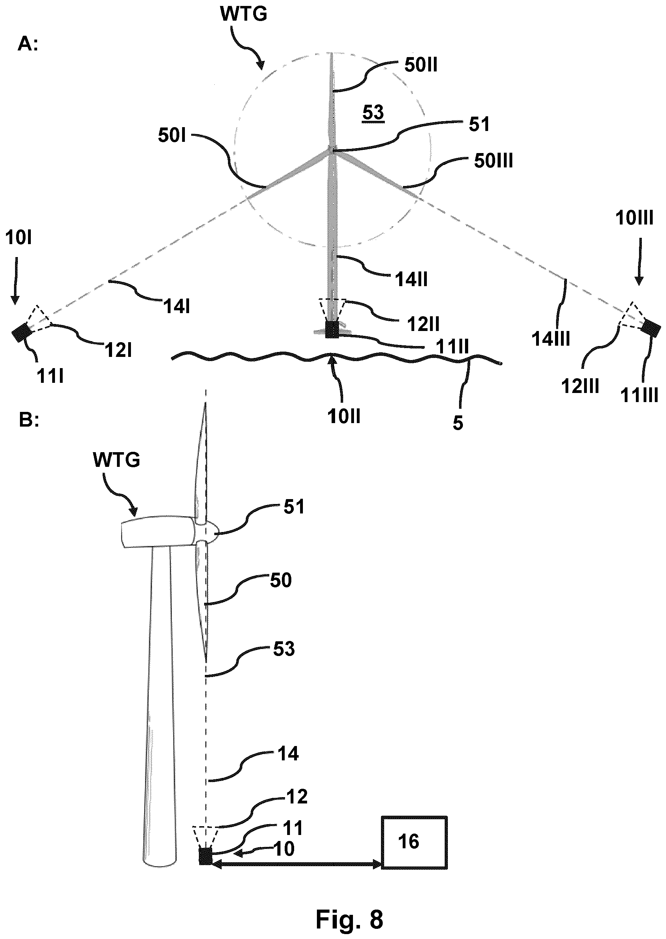

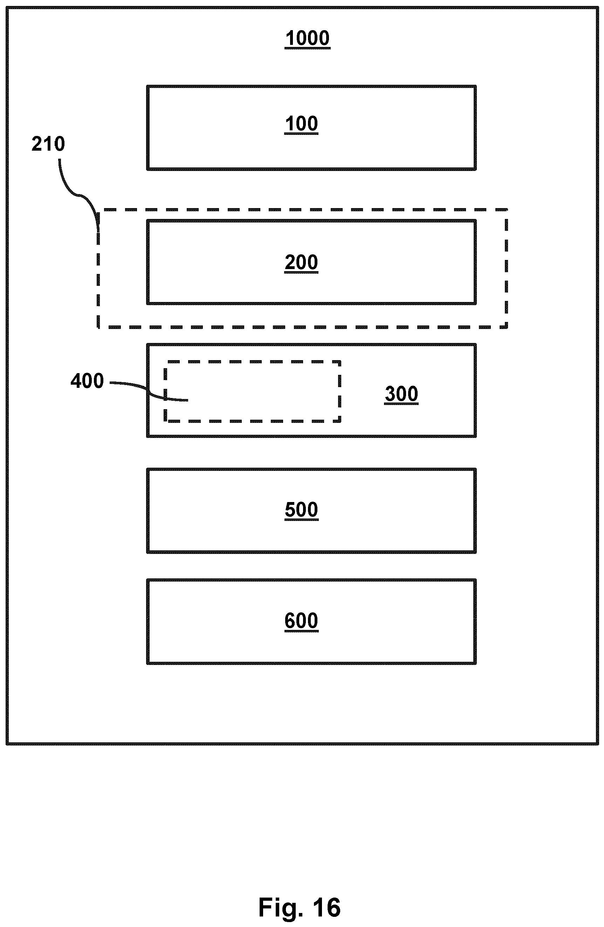

Figure 8A and 8B illustrate in view of figures 1 to 7 a method of visually inspecting 1000 (see figure 16) of an offshore wind turbine generator WTG and parts thereof during operation. Parts may include blades 50. In this case, a wind turbine generator WTG is illustrated with three blades 501, 5011, 50III.

The inspection of the wind turbine generator includes pointing a visual inspection system 10 with a camera 11 with a field of view 12 about a line of sight 14 in a plane 53 of a rotor blade 50 of the wind turbine generator WTG.

It is understood that the camera 11 is operated from a vessel 1 (not shown) and positioned on the sea 5.

Figure 8A discloses three visual inspection systems 101, 1011, 10III. This may not always be the case or necessary. In some situations there may be a single visual inspection system 10 having one of the positons disclosed in figure 2A, or two visual inspection systems 10 positioned on either side of the wind turbine generator WTG, or the first visual inspection system 10 at a centre position below the rotor 51 and the second visual inspection system 10 on either side of the wind turbine generator WTG.

Figure 8B discloses a side view of the wind turbine generator WTG. The visual inspection system 10 has a field of view 12 about a line of sight 14 in a plane 53 of rotor blade 50.

The visual inspection system 10 is in communication with a computational unit 16.

In example, there is a camera setup used for both static and dynamic measurements. During a static measurement, the wind turbine is in standstill, while during the dynamic measurement, the turbine is in operation. In both measurements, the camera setup is positioned in order to align with the blade length axis.

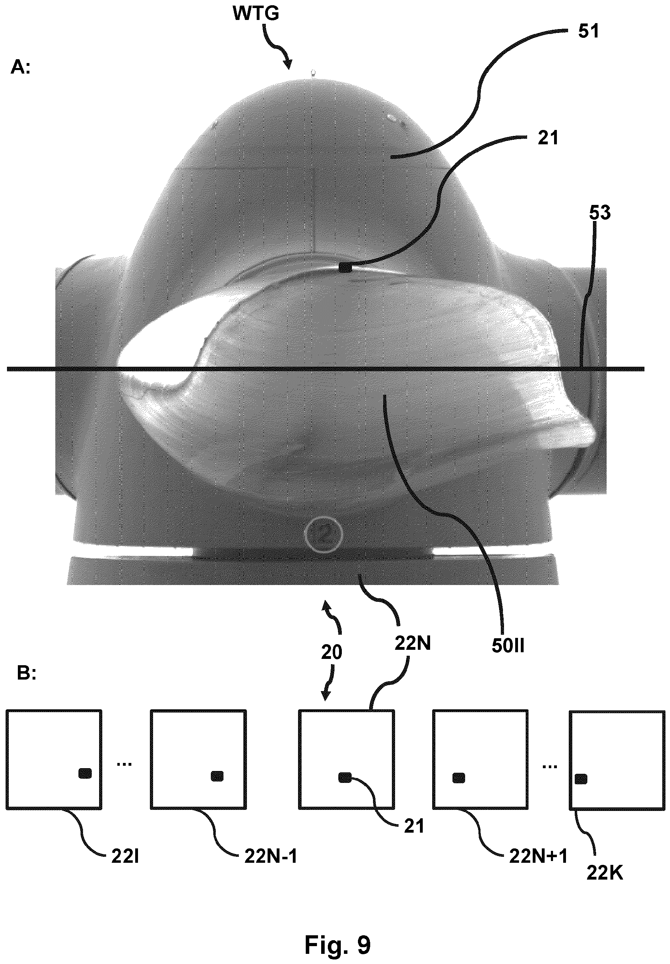

Figure 9 illustrates the result of an act of capturing 200 multiple images of the field of view 12 using the visual inspection system 10.

Figure 9A discloses a single captured image 22N of a wind turbine generator WTG. The captured image 22N shows the rotor 51 and a tip of a rotor blade 5011. The straight black line represents the rotor plane 53. The tip of the rotor blade 50II is in this case a reference point 21.

Figure 9B illustrates a series of captured images 22I-22N-22K, the total number of captured images is K, where K may be set according to the camera or high speed camera used as well as settings depending on the rotational speed of the rotor and the type of inspection.

Figure 9B illustrates how the reference point 21 moves from one side of the captured image 221 to the opposite site 22K.

An operator may select a reference image 20 amongst the captured images 22I-22K.

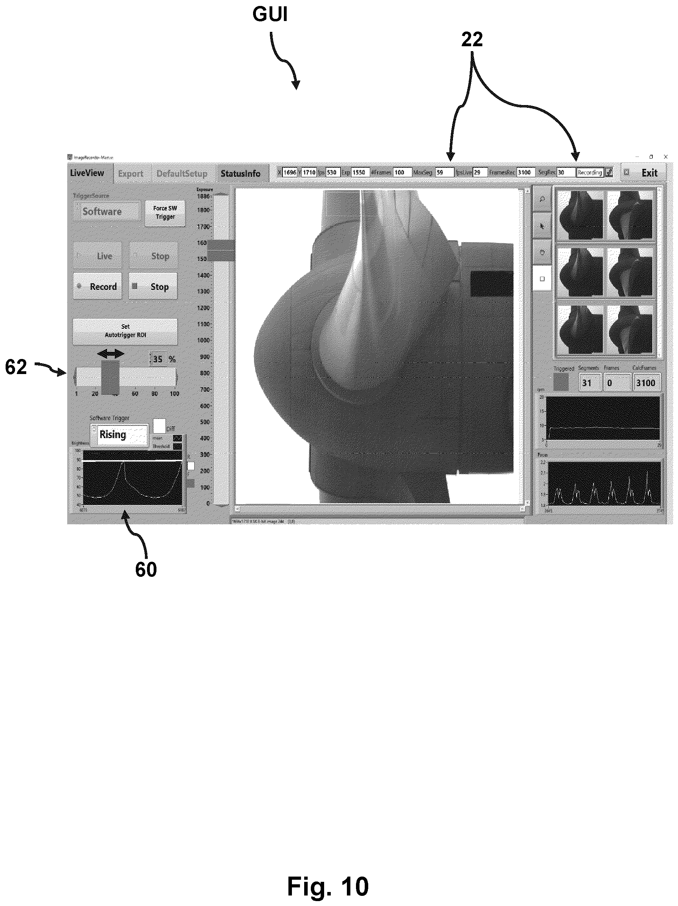

Figure 10 illustrates a graphical user interface GUI according to the invention.

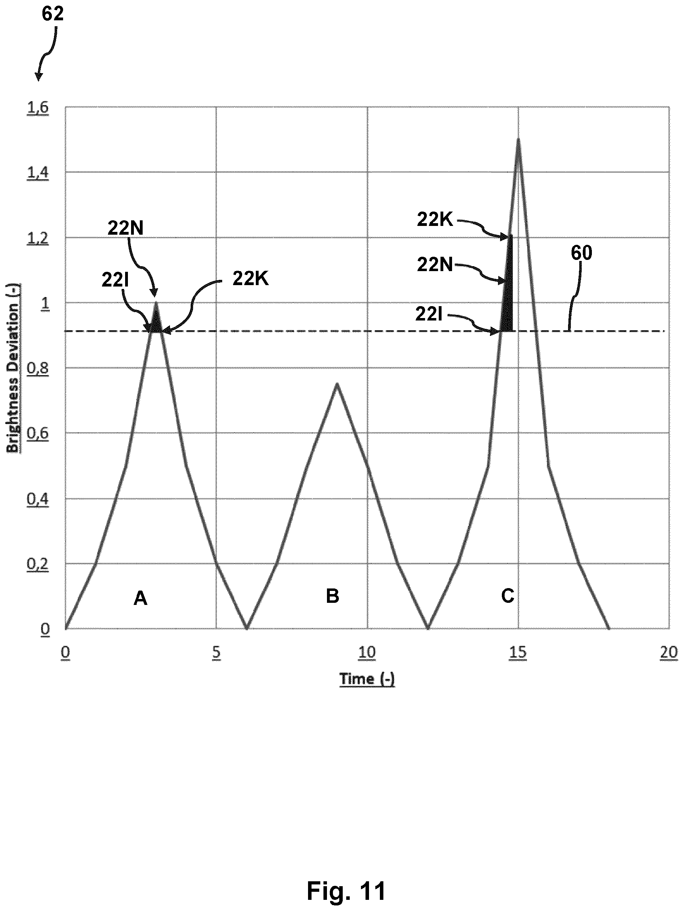

An operator can, by using the graphical user interface GUI, change a parameter 62 such that a trigger 60 of a visual inspection system 10 is changed to a correct value in the sense of an optimal value during operation. It has shown that such human interface provides easy and reliable adjustments, as conditions may change from inspection to inspection. In the present case, the trigger level is changed with at least one means for adjusting. In the present case, the means for adjusting is a slider controlling the parameter 62, which changes a level on the graph displayed in the lower left corner of the GUI. The level on the graph corresponds to the trigger level 60 (shown as a straight white line). An example of this graph is disclosed in detail in Fig 11.

Thereby, the act of capturing 200 is performed by the visual inspection system 10 after an act of triggering 21. The GUI is configured to present at least one captured image 22.

In view of the setups illustrated in figures 1 to 4, an inspection may be performed in example where there may be a step 1, where a camera set-up is positioned on the ground targeting the wind turbine blades, aligned with the blade length axis, while the turbine is operating.

There may be a step 2, where the operator defines measurement parameters like the number of pictures per capture or trigger, the brightness level and a region of interest (ROI) for triggering.

There may be a step 3, using a capture or acquisition software where a pre-defined number of images are taken for every wind turbine blade by triggering the camera whenever the blade passes the selected region of interest. The recording application can be adjusted by the user or operator in order to adapt to any changes in the brightness and/or rotational speed of the rotor, as these affect the triggering of the camera.

There may be a step 4, during recording, where a quality check of the image capture or acquisition is performed by checking a live acquisition image and the first and last images of every blade passing to assure that these are in the desired rotational range.

Figure 11 illustrates a graph showing three different cases (A, B, C), each giving different results.

This is a triggering option where the mean value of the brightness in a region of interest ROI is calculated. When a blade is passing through the ROI, there is a peak indicating the change of this mean brightness value. When this signal is captured, the camera is triggered.

The advantage of this triggering option is that one can check/change this signal and, by using various options, try to capture it in the most efficient way. The trigger option is implemented and controlled by the parameter 62 from figure 4.

The parameter 62, from which the trigger 60 is adjusted, is relative brightness deviation.
Case A: Here the trigger 60 has been adjusted by an operator to a correct level. The resulting act of capturing multiple images 22 of the field of view 12 using the visual inspection system 10 is that captured images 22I-22N-22K is captured on both sides of the maximum. Case A corresponds to the case disclosed in figure 3A-B.
Case B: Here the trigger 60 has been adjusted by an operator to an incorrect level as the visual inspection system 10 is not triggered during a pass of a rotor blade 50.
   However, the operator will be aware of this due to the graphical user interface GUI disclosed in fig. 11. The GUI will display the graph (B) and it will be directly evident from the graph that the trigger 60 should be adjusted by lowering the trigger level.
Case C: Here the trigger 60 has been adjusted by an operator to an incorrect level as the visual inspection system 10 is triggered too early during a pass of a rotor blade 50.

The visual inspection system 10 will begin capturing 200 multiple images, as illustrated by the sequence of images 221... 22K. of the field of view 12. However, the number of captured images 22 will reach K before the maximum of the graph is reached.

However, the operator will be aware of this due to the graphical user interface GUI disclosed in fig. 11. The GUI will display the graph (C) and it will be directly evident from the graph that the trigger 60 should be adjusted by increasing the trigger level 60.

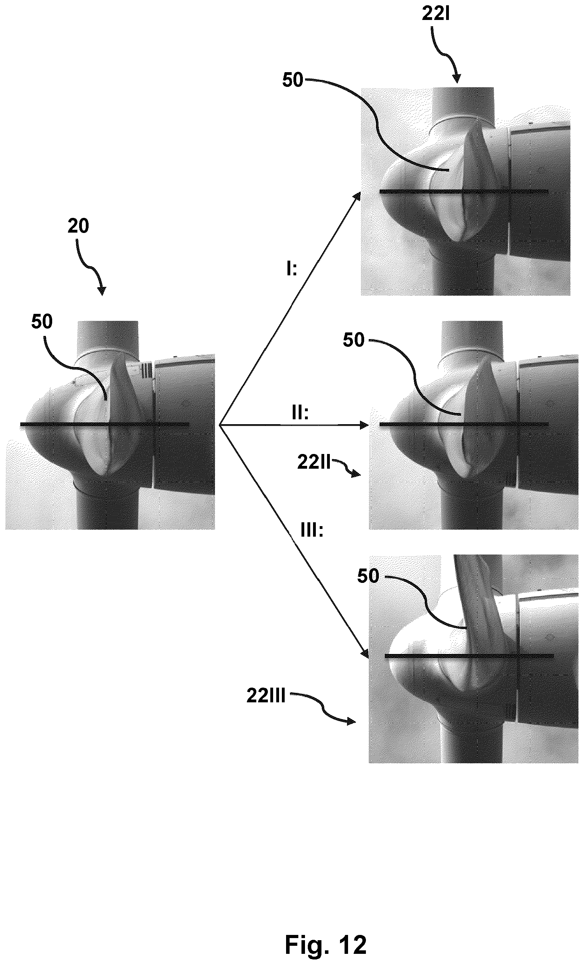

Figure 12 exemplifies sorting as disclosed. For sorting computer implemented procedures, software that uses a variety of image processing methods, such as pattern and feature recognition, pixel coordinates detection, pixel-by-pixel difference, brightness management, angle calculation, slope and proportion evaluations may be used. Figure 6 illustrates a reference image 20 with a blade 50. With reference to the black line through the reference image 20, situation I is a result of a "perfect match", sorting out the captured image 221 where the blade 50 is identical or as identical as the blade 50 in the reference image 20. Situation II illustrates a situation where the captured images 22II is one or two, say more, frames off (i.e. the correct frame is actually some frames before/or after) compared to the blade 50 in the reference image 20. Situation III illustrates a situation where the captured image 22III has missed rotation during capturing or acquisition.

Thus, during the dynamic measurement, several pictures are taken for every blade by triggering the camera whenever the blade is passing through the selected region of interest. Out of these images, one is selected per blade in order to match the other two blades in terms of horizontal alignment (as indicated by the black line). This procedure defines the sorting step of the post-process analysis, completed prior to inspection, which in this case is prepared to be for the relative dynamic blade pitch misalignment calculation.

This procedure may be performed manually and/or automatically or with the input from an operator.

In case of operator assistance, the following steps may be performed. Step 1: One or more reference images 20 are selected by the operator. Step 2: A region of interest ROI such as the brightness of the tip of a blade 50, is also defined by the operator in order to isolate features of the image that assist the sorting procedure. Step 3: Using the input from the operator, the software automatically, per recorded rotation, identifies one image per blade that most matches the reference image/images in terms of horizontal blade alignment, such as situation I.

The advantage of this sorting procedure is that, regardless of any change in the rotational speed of the wind turbine, even within a rotation which will inevitably affect the triggering of the camera, one can efficiently select one image per blade that matches perfectly with the other two blades in terms of horizontal alignment.

An advantage of the automation of this procedure is time efficiency demands for operating on site directly after inspection. A manual sorting would require a couple of hours while the automated sorting can provide the same results in a couple of minutes.

Regarding the static measurement, there is no need for sorting since only one picture is taken for each blade at the same position and pitch angle.

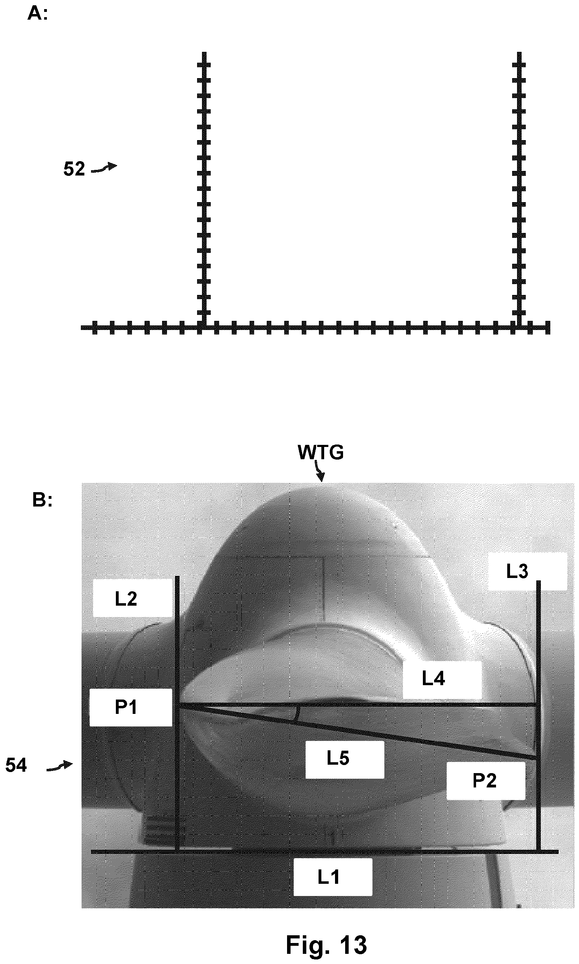

Figure 13 A illustrates, with reference to figure 16, how an act of inspecting 600 comprises an act of determining 610 a deviation amongst blades 50 wherein the act of inspecting 600 involves applying a set of blade metrics 52, e.g. scales as generically shown. Thereby, the act of comparing 500 can be performed by blade metrics 52 applied to the reference image 20 compared to the blade metrics 52 of least one captured image 22.

Figure 13B illustrates a specific metric 52 that may be applied to a reference image 20 for an inspection of relative blade pitch misalignment. Again with reference to figure 16 and previous figures, inspection 600 comprises an act of determining 610 relative blade pitch misalignment 58 between at least two blades 50, wherein the act of inspecting 600 involves applying a set of pitch angle metrics 54 to the reference image 20 and the at least one other captured image 22, and wherein the act of comparing 500 is performed on the pitch angle metrics 54 of the reference image 20 and those of the at least one other captured image 22.

In the specific case the pitch angle metric 54 may be applied for both static and dynamic measurements using the following steps.

Step 1: Define a line (LI) which connects the two nacelle edges. Step 2: Define a second line L2 perpendicular (90°) to line L1, which is tangent to the leading edge of the blade. Step 3: Define the point on line L2, which is tangent to the leading edge of the blade as point P1. Step 4: Define a third line L3, perpendicular to line L1 and tangent to the trailing edge of the blade. Step 5: Define the point on line L3, which is tangent to the leading edge as P2. Step 6: Define a fourth line L4, perpendicular to lines L2 and L3 (parallel to L1), which will be crossing point P1. Step 7: Define a fifth line L5, connecting point P1 on the leading edge of the blade and point P2 on the trailing edge of the blade. Step 8: Calculate the (reference) angle between lines L4 and L5.

The outline method is robust and remains consistent regardless of the wind speed or the rotational speed of the rotor.

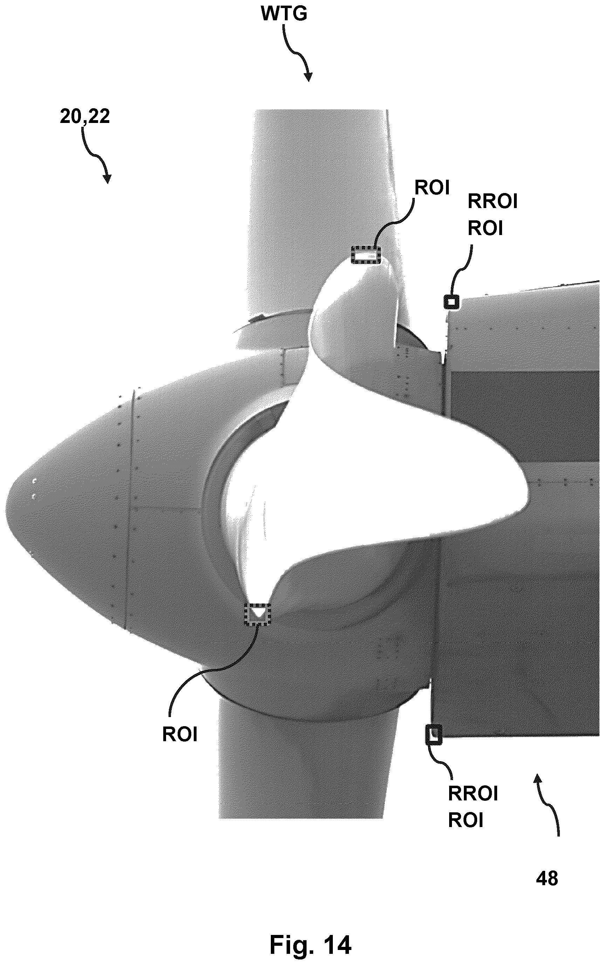

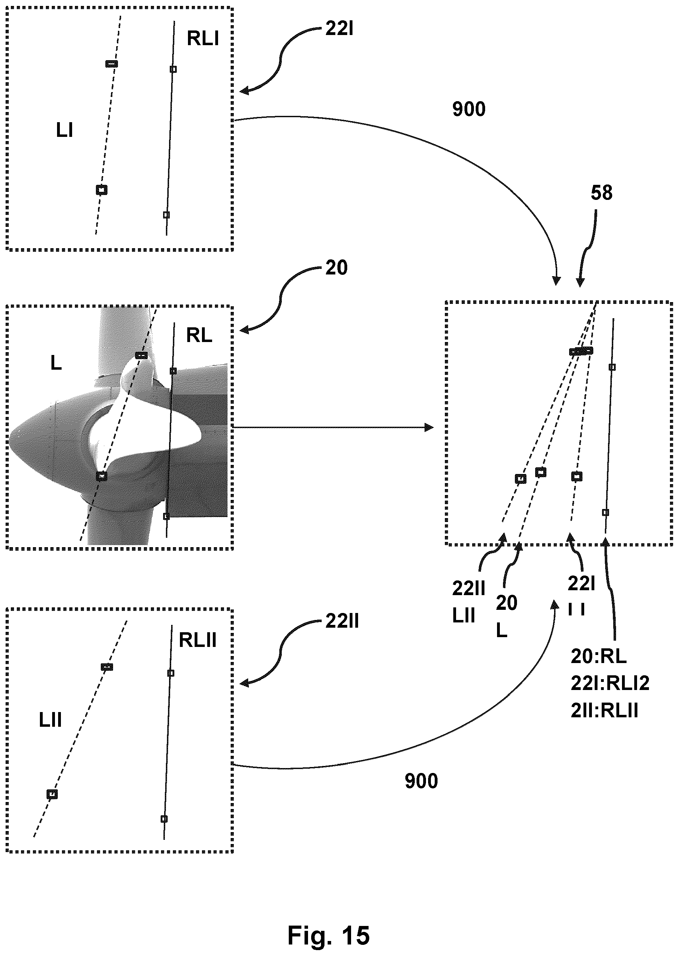

Figures 14 and 15 illustrate acts of sorting and comparing, using an applied metric 52 exemplified by a very simplified blade pitch metric 54 that can be defined on reference image 20 and/or captured or sorted images 22.

With reference to the outlined sorting 400 there may be involved an act of defining one or more regions of interest ROI of the wind turbine generator (WTG) on the reference image 20 and the at least one other captured image 22. Figure 8 illustrates that at least one region of interest (ROI) is a reference region of interest (RROI) which is defined on the nacelle 48 of the WTG. In this case, two RROIs are defined allowing defining a line or a reference metric 52. Such reference regions of interests RROIs may be scaled according to actual dimensions; however, this may not be necessary. Furthermore, other regions of interest ROIs may be relative such as the indicated ROIs on the blade defined on the respective leading and trailing edge of the blade.

For the inspection analysis and calculation of the relative blade pitch misalignment between the wind turbine blades, a variety of image processing methods are used.

These include pattern and feature recognition, pixel coordinate detection, pixel-by-pixel difference, brightness management, angle calculations, and slope and proportion evaluations.

In general an operator may apply the following procedure. Step 1: The operator selects multiple regions of interest ROI, as seen by the rectangles on figure 8, Some ROIs are going to be on fixed features, e.g. on the nacelle 48 and thus, be reference regions of interest RROIs. Other regions of interest may be defined as ROIs on moving features, e.g. blade 50. Step 2: The automated image analysis software detects the defined edges of the first image in all the other sorted blade images and calculates the angle difference between the two lines (e.g. nacelle line and blade line) for each of them. Step 3: After the calculation of the reference angles for each blade, the reference angle result for each blade is subtracted from the corresponding result of the previous blade, e.g. Blade A - Blade B, and the relative blade pitch misalignment between the three blades is calculated.

The advantage of the outline inspection of relative blade pitch misalignment between the wind turbine blades is the improvement in accuracy and time efficiency in order for the inspection to be performed on site.

Figure 15 illustrates further improvement in accuracy of measures from images. This may be performed by applying a transformation as illustrated in continuation of figure 8.

The act of transforming 900 at least one other captured image 22 or sorted image is performed according to the reference region of interest (RROI) of the reference image 20.

In view of the measures or metrics, figure 9 illustrates two reference regions of interest (RROI) on the nacelle 48 defining a reference line RL. There are two moving or relative regions of interest ROIs on the blade 50 defining a line L. A simplified inspection of pitch angle may be the angle between lines RL and L, which may define a set of wind turbine metrics 40 defined by at least one relative region of interest ROI. Before the act of comparing 500, there may be an act of transforming 900 the least one relative region of interest (ROI) according to the transformed wind turbine metrics 40.

In example, a reference image 20 is selected, and, by reference regions of interests RROIs, the reference line RL is defined. The regions of interests ROIs on the blade define the line L. Likewise, a first and second captured image 22I, 22II comprise corresponding RLI, RLII reference lines and LI, LII lines.

The captured images 221, 2211 may be transformed 900 by aligning the reference lines RLI, RLII according to the reference line of RL of the reference image 20. Then image analysis may be performed.

The identified lines LI and LII may be transformed 900 by aligning the reference lines RLI, RLII according to the reference line of RL of the reference image 20.

The transformed lines LI, L2, or both may be used for inspecting 600 the WTG.

In example, LI may come from a blade B and may be compared to L of blade A; and say, yield a misalignment pitch angle between blade A and B. LII may come from a blade C and may be compared to L of blade A, etc.

In example, LI and LII may come from a blade B and be compared to L of blade A. Thus, multiple measurements of the same properties are performed allowing for a more accurate determination or statistical analysis.

Figure 16 illustrates a method of visually inspecting 1000 a wind turbine generator (WTG) as outlined herein, e.g. figures 1 and 2, and parts thereof during operation. The method 1000 comprising acts as follows.

There is an act of pointing 100 a visual inspection system 10 with a field of view 12 about a line of sight 14 in a plane 53 of rotor blade 50 of the wind turbine generator WTG.

There is an act of capturing 200 multiple images 22 of the field of view 12 using the visual inspection system 10.

There is an act of selecting 300 at least one reference image 20 amongst the captured images 22.

There is an act of comparing 500 the at least other captured image 22 with the at least one reference image 20.

There is an act of inspecting 600 structural aspects of the wind turbine generator WTG as a function of the result of the act of comparing 500.

Optional or selectable, the act of capturing 200 may be performed after an act of triggering 210.

Optional or selectable, there is an act of sorting 400 or filtering the captured images 22. The act of sorting 400 is here illustrated as part of the act of selecting 300 but the act of sorting 400 may be performed as a separate act. The act of sorting 400 may be performed by use of image processing. The act of sorting may be filtering, selecting and deselecting images amongst the captured image, excluding the selected reference image.

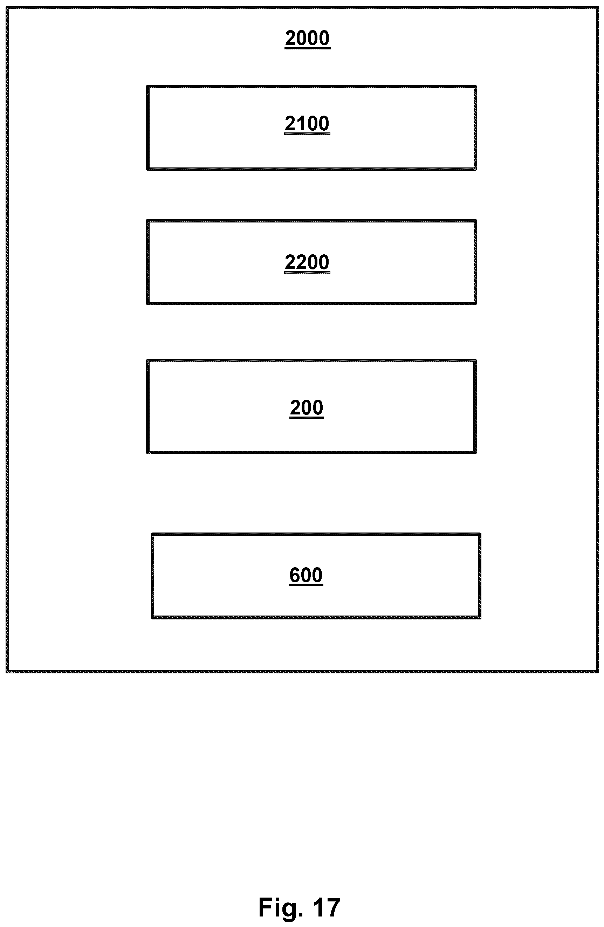

Figure 17 illustrates a method of performing 2000 visually inspection of an offshore wind turbine generator (WTG). The method of performing 2000 is with reference to the method a visual inspection 1000 outlined in figure 16 of an off-shore wind turbine 30 (not shown) using a visual inspection system 10 (not shown) and a vessel 1 (not shown) with an adaptive platform 91 (not shown) supporting a camera 11 (not shown) with a line of sight 14 (not shown) and a field of view 12 (not shown). The features not shown are exemplified in figures 1 to 15.

The method 2000 comprises an act of operating 2100 the visual inspection system 10 whilst the camera 11 (not shown) is being supported by the adaptive platform 91 (not shown) and with the line of sight 14 (not shown) towards a specific off-shore wind turbine 30 (not shown) with at least one fix-point 32 (not shown) or view of interest 23 (not shown) on the offshore wind turbine generator 30 (not shown);

There is an act of adjusting 2200 the adaptive platform 91 (not shown) to maintain the line of sight 14 (not shown) towards the at least one fix-point 32 (not shown) on the offshore wind turbine generator 30 (not shown);

There is an act of capturing 200, as outlined in figure 16, at least one image (22) of the field of view (12) in the line of sight (14) using the visual inspection system (10); and

There is an act of inspecting 600, as outlined in figure 16, of structural aspects of the wind turbine generator 30 (not shown) by comparing 500 the at least one other captured image 22 (not shown) with the at least one reference image 20 (not shown).

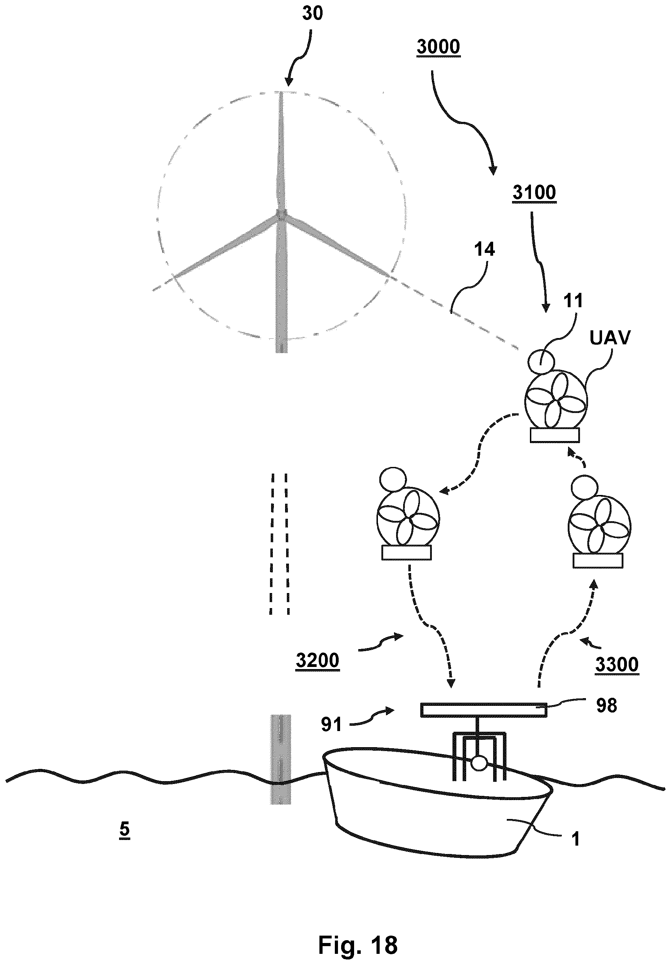

Figure 18 illustrates a method of performing 3000 an unmanned aerial vehicle (UAE) visual inspection 1000 of an off-shore wind turbine 30 using a visual inspection system 10 and a vessel 1 with an adaptive platform 91. The adaptive platform 91 has a helipad 98 configured to support an unmanned aerial vehicle (UAV). The UAV may comprise a camera 11 with a line of sight 14 and a field of view 12.

The method may comprise an act of: positioning 3100 the unmanned aerial vehicle (UAV) relative to the offshore wind turbine 30 with the line of sight (14) towards the wind turbine 30.

There is an act of capturing 200 at least one image 22 of the field of view 12 in the line of sight 14 using the camera 11.

There is an act of landing 3200 the unmanned aerial vehicle (UAV) on the helipad 98 whilst adjusting 2200 the helipad 98 of the adaptive platform 91.

As outlined in the previous figures, there are acts of inspecting 600 structural aspects of the wind turbine generator 30 by comparing 500 the at least one other captured image 22 with the at least one reference image 20.

There may be an act of lifting 3300 the unmanned aerial vehicle (UAV) from the helipad 98 whilst adjusting 2200 the adaptive platform 91.

As outlined in the previous figures, acts of adjusting 2200 is performed by a first adaptive platform 70 supported by a second adaptive platform 80, wherein the first adaptive platform 70 is stabilizing the helipad 98 and the second adaptive platform is stabilizing the first adaptive platform 70.

## Claims

1. A method of performing (2000) a visual inspection (1000) of an offshore wind turbine (30) using a visual inspection system (10) and a vessel (1) with an adaptive platform (91) supporting a camera (11) with a line of sight (14) and a field of view (12); the method comprising acts of:
- operating (2100) the visual inspection system (10) whilst the camera (11) is being supported by the adaptive platform (91) and with the line of sight (14) towards a specific off-shore wind turbine (30) with at least one fix-point (32) on the offshore wind turbine generator (30);
- adjusting (2200) the adaptive platform (91) to maintain the line of sight (14) towards the at least one fix-point (32) on the offshore wind turbine generator (30);
- capturing (200) at least one image (22) of the field of view (12) in the line of sight (14) using the visual inspection system (10); and
- inspecting (600) structural aspects of the wind turbine generator (30) by comparing (500) the at least one other captured image (22) with the at least one reference image (20).

2. The method (2000) according to claim 1, wherein the act of adjusting (2200) is performed by a first adaptive platform (70) supported by a second adaptive platform (80), wherein the first adaptive platform (70) is stabilizing the camera (11) and the second adaptive platform is stabilizing the first adaptive platform (70).

3. The method (2000) according to claim 2, wherein the act of adjusting (2200) comprises one or more acts of stabilizing the first adaptive platform (70) in at least one of roll, pitch and yaw orientations.

4. The method (2000) according to any one or more of claims 1 to 3, further comprising an act of positioning (2300) the vessel (1) in a suitable position related to the rotor plane (55) of the off-shore wind turbine (30) and retaining (2330) the vessel (1) in that position.

5. The method (2000) according to any one or more of claims 2 to 4, wherein the act of adjusting (2200) comprises one or more acts of translocating the second adaptive platform (80) in at least one of surge, sway and heave directions.

6. The method (2000) according to any one or more of claims 1 to 5, wherein the act of operating (2100) comprises one or more acts of stabilizing the vessel (1).

7. The method (2000) according to any one or more of claims 1 to 6, wherein the acts are performed by using a small offshore vessel (1) in the class of a crew transfer vessel (CTV).

8. The method (2000) according to any one or more of claims 1 to 7, wherein the act of capturing (200) is performed after an act of triggering (210) according to a trigger (60) that is initiated as a function of the region of interest (ROI) of an offshore wind turbine generator (WTG).

9. The method (2000) according to claim 8, further comprising an act of sorting (400) the captured images (22), which act of sorting (400) is performed on the basis of an input from an operator and involves an act of defining (410) a region of interest (ROI) in a reference image (20) and selecting captured images (22) based on the region of interest (ROI).

10. The method (2000) according to claim 9, wherein the act of sorting (400) involves an act of defining one or more regions of interest (ROI) of the off-shore wind turbine generator (WTG) on the reference image (20) and the at least one other captured image (22), wherein at least one region of interest (ROI) is a reference region of interest (RROI), and wherein there is an act of transforming (900) at least one other captured image (22), the act being performed according to the reference region of interest (RROI) of the reference image (20).

11. The method (2000) according to claim 10, comprising at least two reference regions of interest (RROI) and a set of wind turbine metrics (40) defined by at least one relative region of interest (ROI) and wherein there is an act of transforming (900) the least one relative region of interest (ROI) before comparing (500) the transformed wind turbine metrics (40).

12. An offshore wind turbine generator visual inspection system (90) comprising means for performing the act of one or more of claims 1 to 11.

13. An offshore wind turbine generator visual inspection system (90) comprising a visual inspection system (10) and an adaptive platform (91) supporting a camera (11) with a line of sight (14) and a field of view (12), wherein:
- the adaptive platform (91) is configured to maintain the line of sight (14) towards the at least one fix-point (32) of an offshore wind turbine generator (30) by means of a first adaptive platform (70) configured to stabilize the camera (11) and a second adaptive platform (80) configured to stabilize the first adaptive platform (70); and
- the visual inspection system (10) is configured to capturing (10) at least one image (22) of the field of view (12) of the line of sight (14).

14. The inspection system (90) according to claim 12 or 13, wherein the visual inspection system (10) is configured with a trigger (60) configured to trigger an act of capturing (200) that is initiated as a function of the region of interest (ROI) of an off shore wind turbine generator (30) being present in the field of view (12) along the line of sight (14).

15. The inspection system (90) according to any one or more of claims 12 to 14, further comprising a computational unit (16) configured with an interface means configured to define at least one region of interest (ROI) on a captured image (22) and for selecting at least one reference image (20).

16. A method of performing (3000) an unmanned aerial vehicle (UAE) visual inspection (1000) of an off-shore wind turbine (30) using a visual inspection system (10) and a vessel (1) with an adaptive platform (60) with a helipad (98) configured to support an unmanned aerial vehicle (UAV) comprising a camera (11) with a line of sight (14) and a field of view (12); the method comprising acts of:
- positioning (3100) the unmanned aerial vehicle (UAV) relative to the offshore wind turbine (30) with the line of sight (14) towards the wind turbine (30);
- capturing (200) at least one image (22) of the field of view (12) in the line of sight (14) using the camera (11); and
- landing (3200) the unmanned aerial vehicle (UAV) on the helipad () whilst adjusting (2200) the helipad () of the adaptive platform (40).
